Europäisches Patentamt

European Patent Office

Office européen des brevets

(19)

(11) Publication number: **0 432 056 A1**

# EUROPEAN PATENT APPLICATION

(12)

(21) Application number: **90420505.1**

(22) Date of filing: **22.11.90**

(51) Int. Cl.⁵: **G11B 27/34, G11B 5/008, G11B 20/00, // G09B5/06**

(30) Priority: **24.11.89 KR 1713389**

(43) Date of publication of application:
**12.06.91 Bulletin 91/24**

(84) Designated Contracting States:
**AT BE CH DE DK ES FR GB GR IT LI LU NL SE**

(71) Applicant: **NARA TECHNICS CO., LTD**
**333-17, Yangjae-Dong, Socho-Ku**
**Seoul (KR)**

(72) Inventor: **Kim, Hyun Min**
**117-7 Bangee-Dong, Songpa-ku**
**Seoul (KR)**

(74) Representative: **de Beaumont, Michel**
**1bis, rue Champollion**
**F-38000 Grenoble (FR)**

(54) **Character information display system of cassette player and a method thereof.**

(57)    A character information display system of a cassette player and a method for displaying the character information corresponding to audio signal being output through speaker on a LCD unit (12) provided in the cassette player.

The system comprises two heads (LH,RH) for tracking two tracks of a tape, pre-amplifiers (1,2), power amplifiers (3,4), A/D converter (6), input/output (7), CPU (8), RAM (10) and LCD controller (11) for displaying the character signal being output from the CPU on a LCD unity (12). In the system, audio signal is recorded in monaural on the right track of tape to be tracked by the right head and on the left track of tape to be tracked by the left head a starting signal indicating the start of a sentence, a control word signal indicating the language selection function and display selection function, and an ending signal indicating the character information signal of a sentence and the end of a sentence are recorded in order.

FIG.1

# CHARACTER INFORMATION DISPLAY SYSTEM OF CASSETTE PLAYER AND A METHOD THEREOF

## BACKGROUND OF THE INVENTION

The present invention relates to a character information display system for a cassette player, more particularly to a character information display system for a cassette player and a method for displaying character information which enable such character information as the corresponding character and/or figure to be displayed on a liquid crystal display (LCD) screen at the same time when audio (sound) signal is output through a speaker. The ordinary cassette player has been using as an audio exclusive appliance to record audio signal on a tape or to reproduce the audio signal recorded on a tape. Accordingly, there would be still no problem even in case of listening to the music using an ordinary cassette player.

However, since the study aid materials are required for the effectiveness to watch the characters at the same time when the reproduced signal of a cassette player is listening to, in case of learning the foreign languages etc. The conventional cassette player brings not only inconvenience but also there is defect to make a user sick of using it and to give up the learning halfway.

In view of the above mentioned defect in the conventional cassette player, audio signal and character information signal are separately recorded on each channel of the stereo tape having two channels and the audio signal recorded on the tape is output to the speaker after it has been reproduced and processed in the first channel head. It has been known as the system that the character information signal recorded on the tape is to be displayed on the computer monitor (CRT) after the signal has been produce processed on the 2nd channel head.

However, in the conventional system, since a separate computer system and a monitor (CRT) have to be used to display the character information, such a system is not applicable to a portable cassette player. There is also another defect being restricted for the learning space in case of intending to learn foreign laguages.

Recently, the video cassette tape recorder (VCR) recording and reproducing video signals is used, however, the VCR not only casts a burden upon the users because the price is expensive but also there is a defect of being impossible to use it as a portable learning aid material because the big dimension has the learning space restricted.

## SUMMARY OF THE INVENTION

Therefore, an object of the present invention is to provide a portable cassette player on which such character information as character and/or figure corresponding to the audio signal at the same time when the audio signal is output through a speaker, can be displayed on the liquid crystal display screen.

Another object of the present invention is to provide a character information display system and a method for displaying the character information which either perform the function of the conventional cassette player only by the selection of users or display the character information signal which is output from the audio signal through a speaker on the liquid crystal display screen.

Further object of the present invention is to provide a character information display system and a method for displaying the character information in which the character information signal is displayed momentarily, in scroll or repeatedly in response to a command control signal.

The above objects of the present invention can be attained by : recording an audio signal on the right track of a cassette tape ; recording the character information signal and command control signal corresponding to the audio signal on the left track ; reproducing and amplifying the audio signal in the right head to output to the left and right speakers ; reproducing and amplifying the character information signal and command control signal in the left head to convert into digital signals ; processing the digital signals of the character information signal and command control signal in a central processing unit (CPU) ; and thereafter displaying the character, information signal on a LCD screen momentarily or in scroll basis in response to the command control signal.

According to the present invention, since the audio signal is reproduced in the right head to output to the left and right speakers and the character information signal corresponding to the audio signal is reproduced in the left head and displayed on the LCD screen which is installed in the cassette player, the system is applicable even to a small-sized portable cassette players, also the system has an effect to be used as the learning aid material regardless of the studying space and also to be applicable to portable digital audio tape recorder and portable compact disk player with no difficulty. The above and other objects, features and advantages of the invention will become more apparent from the following detailed description taken in conjunction with the accompanying drawings.

## BRIEF DESCRIPTION OF THE DRAWINGS

Fig. 1 is a block diagram showing an embodiment of the character information display system according to the present invention,

Figs. 2 and 3 are block diagrams showing alterative embodiments of Fig. 1,

Fig. 4 is a block diagram showing another embodiment of the character information display system according to the present invention,

Fig. 5 is a blook diagram showing an embodiment to which the present invention is applied to a digital audio tape recorder,

Fig. 6 is a flow chart showing the character information recording method according to the preeent invention,

Fig. 7 is a flow chart showing the character information reproduction method according to the present invention,

Figs. 8A to 8E are diagrams showing the recording types on a cassette tape, in which

Figs. 8A to 8C are explanatory views showing the type of two-track recording,

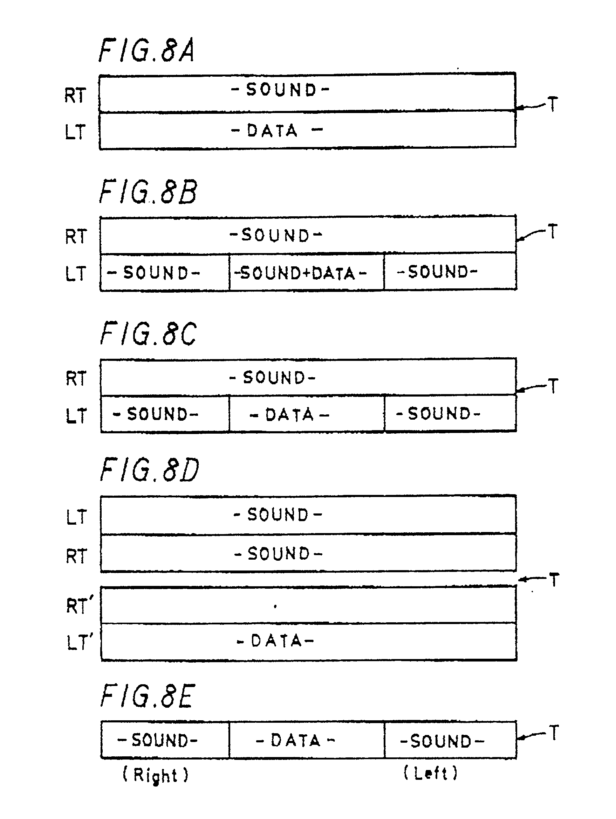

Fig. 8D is an explanatory view showing the type of four-track recording, and

Fig. 8E is an explanatory view showing the recording type of a tape to be applied to a digital audio tape recorder, and

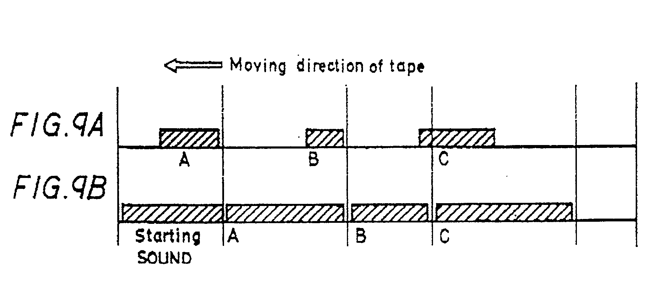

Fig. 9 is an explanatory view showing the relationship of the recording sequence between an audio signal and a character signal.

## DETAILED DESCRIPTION OF THE INVENTION

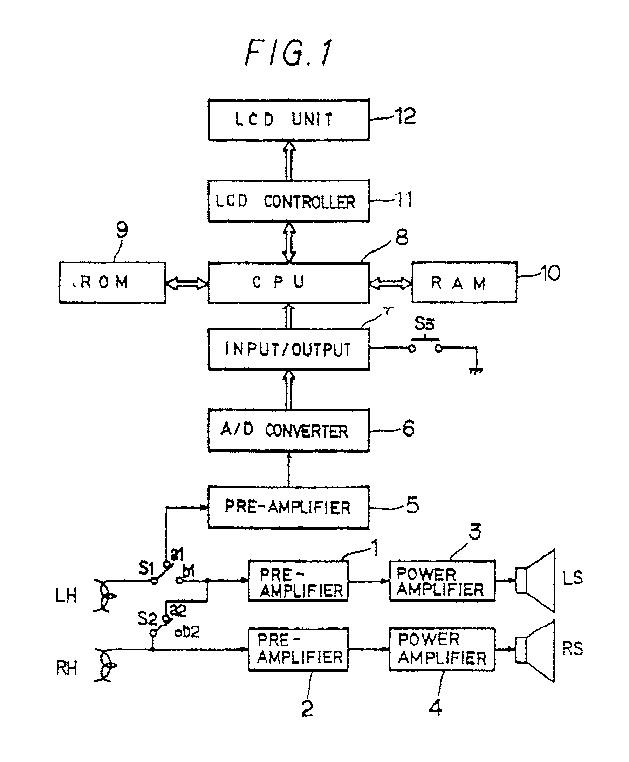

Referring to Fig. 1, in a cassette player where left and right heads LH and RH are connected with left and right speakers LS and RS via pre-amplifiers 1 and 2 and power amplifiers 3 and 4 respectively, to the said left and right heads LH and RH, switches S1 and S2 interlocked thereto are connected, and a fixed terminal b1 of the first switch S1 and a fixed terminal a2 of the second switch S2 are connected in common to an input terminal of the pre-amplifier 1, and a fixed terminal al of the first switch S1 is connected to a CPU (Central Processing Unit) 8 via a pre-amplifier 5, an analog/digital converter 6 and the input/output 7. ROM for programming 9 and RAM 10 for storing data are connected with the CPU 8 and at the same time, the output terminal of the CPU 8 is connected with an LCD (Liquid Crystal Display) unit 12 through an LCD controller 11.

In the drawings, reference S3 represents an interrupt switch, and the first and second switches S1 and S2 are constituted in such that they are short-circuited to their fixed terminals a1 and a2 in case of selection of the character information display function, and they are short-circuited to the separate fixed terminals b1 and b2, respectively, in case of selection of the audio exclusive function.

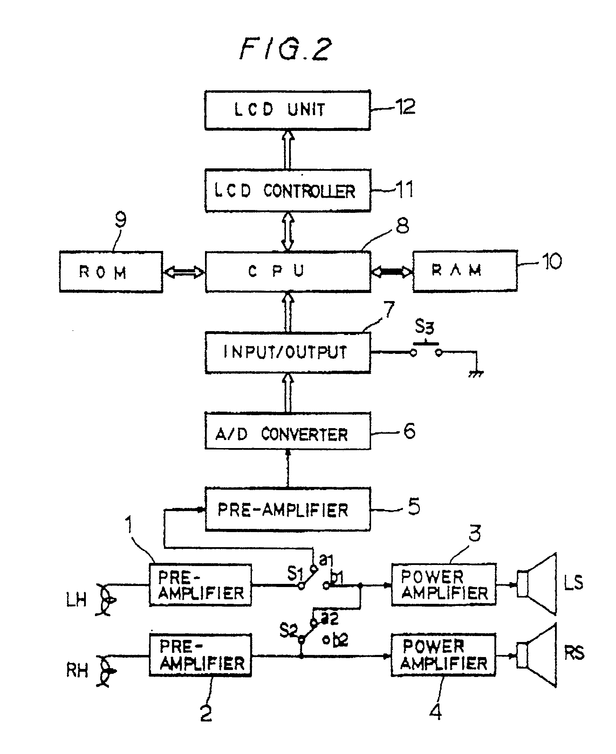

Fig. 2 is a block diagram showing an alterative example of Fig. 1, wherein pre-amplifiers 1 and 2 are directly connected to left and right heads LH and RH, the switches S1 and S2 are connected to said pre-amplifiers 1 and 2, other side fixed terminal b1 of the switch S1 and one side fixed terminal a2 of the switch S2 are connected in common to an input of a power amplifier 3, and one side fixed terminal a1 of the switch S1 is connected to a pre-amplifier 5, and others are the same as the corresponding parts as in Fig. 1.

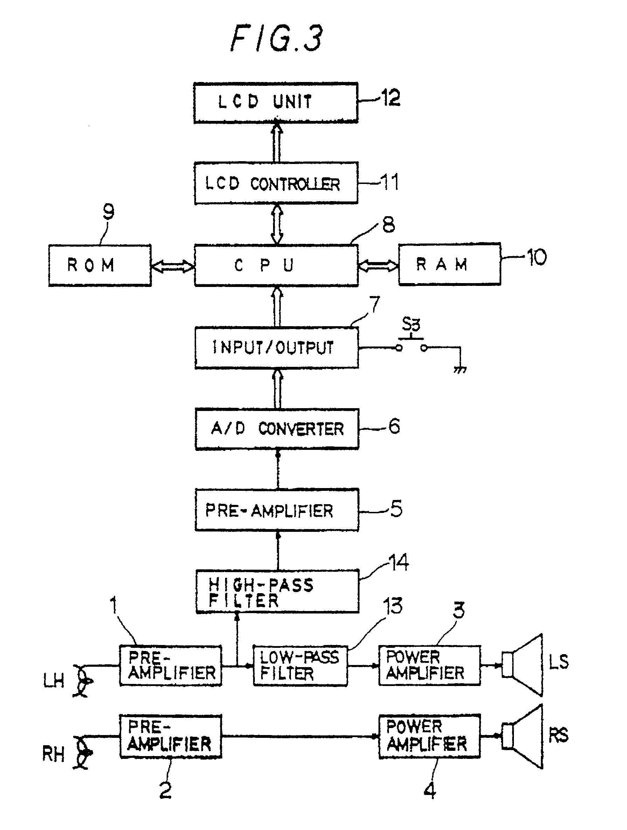

Fig. 3 is a block diagram showing another alterative example of Fig. 1, wherein an output terminal of the pre-amplifier 1 connected to the left head LH is connected via a low-pass filter 13 and a high-pass filter 14 to power amplifier 3 and a pre-amplifier 5, respectively, and others are the same as the corresponding parts in Fig. 1.

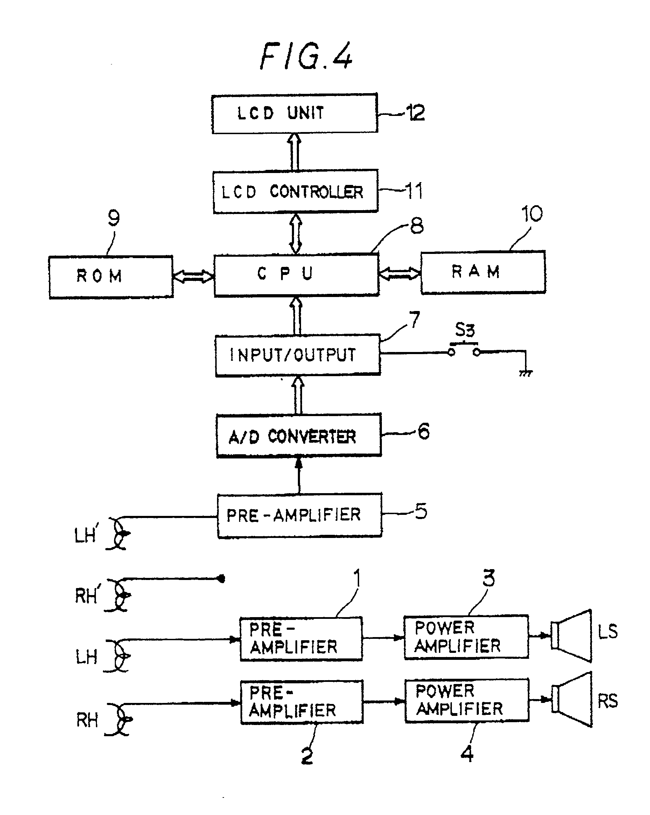

Fig. 4 is a block diagram showing the case being applicable to 4-track head which is a reciprocating reproduction head. As shown in Fig. 4, the left and right heads LH and RH are directly connected to the first and second pre-amplifiers 1 and 2 and another left head LH′ is directly connected to the third pre-amplifier 5 and the other components are the same as those in Fig. 1.

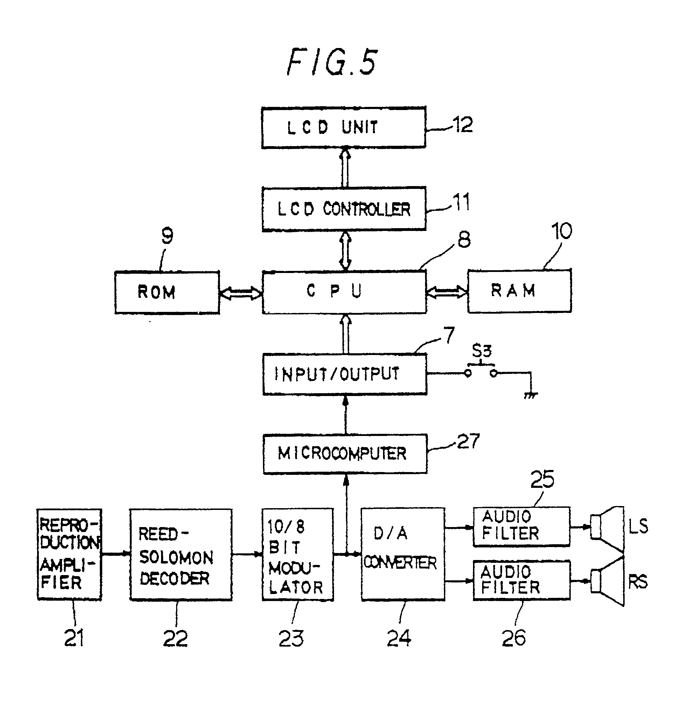

Fig. 5 is a block diagram shoving a case that major configuration of above-described Fig. 1 is applied to a digital audio tape player. As shown in Fig. 5, in a digital audio tape player in which output side of playback amplifier 21 is connected through a Reed-Solomon decoder 22 and a 10/8 bit modulator 23 to a digital/analog converter 24, and an output of said digital/analog converter 24 is connected respectively through audio filters 25 and 26 to left and right speakers LS and RS, it is constituted in such a manner that the output of said 10/8 bit modulator 23 is connected to microcomputer 27, and thereby character information signal and the like are detected at said microcomputer 27 and then they are applied to an input/output section 7 of Fig. 1.

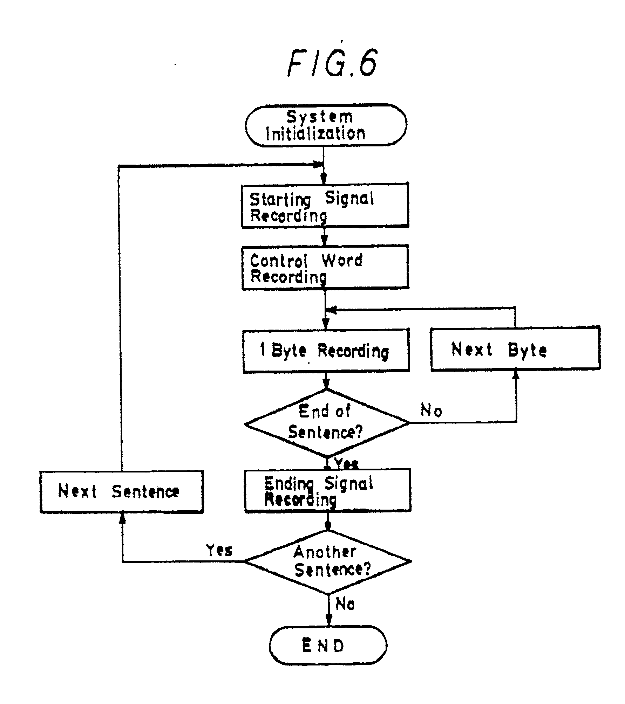

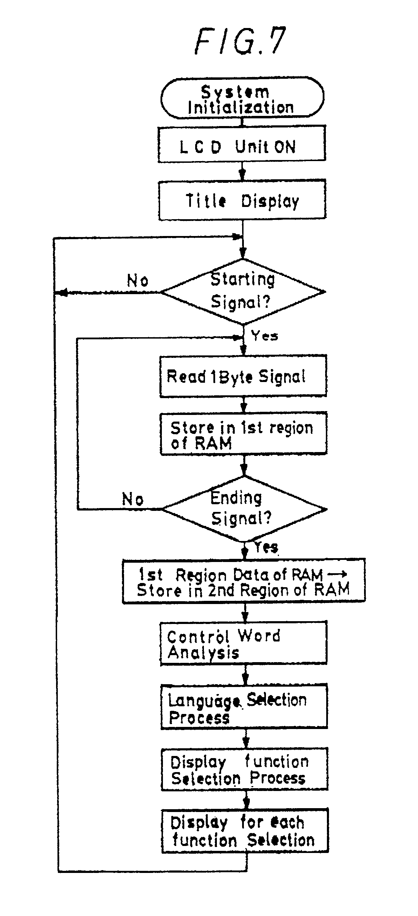

Fig. 6 is a flow chart shoving the character informtion recording method of the present invention. As shown in Fig. 6, the starting signal indicating the start of a sentence is recorded after the system has been initialized and one byte of the sentence is recorded after the control word has been recorded, and thereafter the next byte of the character information is repeatedly recorded until the end of the sentence when it is not the end of the sentence, and the end signal showing the end of the sentence is recorded when it is the end of sentence, and in case that there is another sentence, the process after the recording of the above starting signal is repeated and the character information is recorded.

Fig. 7 is a flow chart showing the character information reproduction method in the CPU 8 of Fig. 1 through Fig. 5. As shown in Fig. 7, the LCD controller 11 is turned on after the system has been initialized, and a title is indicated like "DISPLAY CASSETTE" on the LCD 12, and when the starting signal indicating the start of the sentence is detected, the character information is read one byte by one byte until the signal indicating the end of the sentence is detected and the character information is stored in sequence in the first region of the RAM 10, and when the ending signal is detected, the character information data which is stored in the first region of the RAM 10 is stored in the second region of the RAM 10 and after the language selection process and the display function selection process are carried out by anayizing the control word, the character information data stored in the second region of the RAM 10 is displayed on the LCD part 12 in accordance with each function selection.

Fig. 8A is an explanatory view showing the recording type of a cassette tape to be used on the cassette player of Figs. 1 et 2. As shown in Fig. 8A, the sound (audio) signal is recorded in monophonic in the right track RT of the cassette tape T1 to be tracked in the right head RH, and the starting signal indicating the start of each sentence → the language selection function and the control word signal indicating the display selection function → the character information signal → the end signal indicating the end of a sentence are recorded in sequence on the left track LT of the cassette tape T to be tracked on the left head LH.

Fig. 8B is an explanatory diagram for illustrating a recording form on the cassette tape used for the cassette tape player of Fig. 3. As shown in Fig. 8B, it is constituted in such a manner that sound signal is recorded in stereophony to right track RT and left track LT of the cassette tape to be tracked at right head RH and left head LH and simultaneously data, that is, starting signal for indicating the start of sentence at every sentence → control word signal for indicating language selecting function and indication selecting function → character information signal → ending signal for indicating the end of sentence are recorded in sequence by overlapping with said sound signal at every predetermined section of said left track LT.

Fig. 8C is an explanatory diagram for illustrating another recording form on the cassette tape used for the cassette tape player of Fig. 3. As shown in Fig. 8C, only sound signal is recorded to right track RT to be tracked at the right head RH, and only data are recorded at every section with recording sound signal to left track LT to be tracked at left head LH. That is, it is constituted in such a manner that starting signal indicating the start of sentence at every sentence without recording sound signal at every predetermined section of left track LT → control word signal for representing language selecting function and indication selecting function → character information signal → ending signal indicating the end of sentence are recorded in sequence.

Fig. 8D is an explanatory diagram for illustrating a recording form on the cassette tape used for the cassette tape player of aforementioned Fig. 4. As shown in Fig. 8D, it is constituted in such a manner that sound signal is recorded in stereophony to left and right tracks LT and RT to be tracked at the left and right heads LH and RH, no signal state is made to right track RT' to be tracked at another right head RH', and the starting signal indicating the start of sentence at every sentence → the control word signal for indicating language selecting function and indication selecting function → the character information signal → the end signal for indicating the end of sentence are recorded in sequence to left track LT' to be tracked at another left head LH'.

Fig. 8E is an explanatory diagram for illustrating a recording form on the cassette tape used for the digital audio tape player of aforementioned Fig. 5. A shown in Fig. 8E, it is constituted in such a manner that left and right sound signals and data are recorded in sequence, that is, as above description, the starting signal → the control word signal → the end signal are recorded in sequence to subcode of the track recorded with left and right sound signals so as to discriminate as code.

On the other hand, the above control word signal is constituted by 8 bytes and the upper 4 bytes are used as the language selection function byte, and the lower 4 bytes are used as the display selection byte.

The language selection function and the display selection function depending upon the control word signal are as the following Table 1.

## TABLE 1

| Upper 4 bytes | | Lower 4 bytes | |
|---|---|---|---|
| bit set value | Function | bit set value | Function |
| 0001 | English | 0001 | Momentary display |
| 0010 | Japanese | 0010 | Sequence display |
| 0011 | Korean | 0011 | Momentary display —→ Sequence display |
| 0100 | Franch | 0100 | Momentary display —→ Momentary display |
| 0101 | German | 0101 | Sequence display —→ Momentary display |
| 0110 | Spanish | 0110 | Momentary display —→ Sequence display —→ Momentary display |
| 0111 | Russian | . | . |
| . | . | . | . |
| . | . | . | . |
| . | . | . | . |
| . | . | . | . |

On the other hand, it is explained for a case that the control word signal is constituted by 8 bits being of one byte in the above description, however, said control word signal can be constituted by 2 bytes, and thereby first byte can be used as a language selecting functional byte, and second byte can be used as indication selecting functional byte.

Wherein, from zero bit D0 to sixth bit D6 of the first byte are used as language selecting functional bits, zero bit D0 of the second byte is used as flashing selection functional bit, from first bit D1 to fourth bit D4 are used as indication selecting functional bit in the manner as example of said table 1, fifth bit D5 is used as indication connecting functional bit, ans sixth and seventh bits D6 and D7 are used as indication speed selecting functional bit.

Fig. 9 is an explanatory view showing the relationship between the above signals which are to be recorded in the same way as Fig. 8 and the recording sequence of the character information signal.

Fig. 9A shows the recording sequence of the character information signal and Fig. 9B shows the recording sequence of the audio signal.

As shown in Figs. 9A and 9B when the character information signal corresponding to a sentence A and a sentence B is recorded prior to the recording of the sound signal of the sentence A and the sentence B, the sound signal of the sentence A and the sentence B are reproduced after the character information signals of the sentences A and B have been reproduced in advance. Thereby, the character information signals of the sentences A and B can be displayed on the LCD unit at the same time when the sound signals of the sentences A and B are output through a speaker. Also, when the character information signal corresponding to a sentence C at the initial stage when the sound signal of the sentence C is recorded, the character information signal of the sentence C is reproduced and the sound signal of the sentence C can be reproduced, and thereby the character information signal of the sentence C can be displayed on the LCD unit at a certain period of time after the sound signal has been output through a speaker. On the other hand, the recording time of the character information signal corresponding to the sound signal is not limited as the above explanation. Since the recording time of the character information signal is extreamly shorter than the recording time of the sound signal, the contents of studying materials which are to be desirable to record can be determined at editor's discretion.

Hereinafter, the operation and effect of the present invention will be described in detail.

In Fig. 1, in order to select an audio exclusive function, the switches S1 and S2 are short-circuited to their separate fixed terminals b1 and b2, and when the audio exclusive tape is reproduced, the sound signals which are reproduced on the left and right heads LH and RH are amplified in the first and second pre-amplifiers 1 and 2 after having been passed through the first and second switches S1 and S2 and finally they are output in stereo to the left speaker LS and the right speaker RS.

On the other hand, in order to select the character information display function, the switches S1 and S2 are short-circuited to their primary fixed terminals a1 and a2, and when the recorded cassette tape T1 is reproduced, as shown in Fig. 8A the sound signal which is recorded on the right track RT of the cassette tape T1 is reproduced on the right head RH, and the reproduced sound signal is amplified in the second pre-amplifier 2 and the second power amplifier 4 and is output to the right speaker RS and at the same time, the reproduced sound signal is amplified in the first pre-amplifier 1 and the first power amplifier 3 and output to the left speaker LS after having been passed the second switch S2.

Namely, at this time, mono audio signal which is reproduced on the right head RH is output to the left speaker LS and the right speaker RS. And at this time, the starting signal, the control word signal, the character information signal and the ending signal which have been recorded in the left track LT of the cassette tape T1 are reproduced on the left head LH. The reproduced signal is amplified in the third pre-amplifier 5 after having been passed the first switch S1, and it further is converted into a digital signal in the analog/digital converter 6. The converted digital signal is applied to the CPU 8 through the input/output section 7. Thereby, the CPU 8 displays the digital signal on the LCD unit 12 after having processed in accordance with the flow chart of Fig. 7 according to the contents of the programming of ROM 9. That is to say, when the reproduction selection signal is input through the input/output section 7, the CPU 8 turns the LCD controller 11 on and displays the title as "DISPLAY CASSETTE" on the LCD unit 12 after having initialized the system.

Thereafter, when the starting signal indicating the start of a sentence is detected from the signal applied through the input/output section 7 by converting into the digital signal in the analog/digital coverter 6 as above explanation, the output signal of the input/output section 7 is stored in sequence in the first region of the ROM 10 by reading the byte one by one until the ending signal indicating the end of a sentence is detected. Henthforth, when the ending signal is detected, the character information data which is stored in sequence in the 1st region of the above RAM 10 shall be read and be stored in the 2nd region of the RAM 10. Thereafter, the character selection processing and the display function selection processing are performed by analyzing the control word signal, and the character information data which is stored in the second region of the RAM 10 is displayed on the LCD unit 12 by controlling the LCD controller 11 in accordance with the selection of each function.

For an example, as shown in Table 1, supposing that the upper 4 bytes D7-D4 of the control word are English selection value and the lower 4 bytes D3-D0 are the momentary display selection value, the character information data stored in the second region of the RAM 10 is processed in accordance with the English selection and the LCD controller 11 is controlled in accordance with the momentary display, and then the English sentence according to the character information data is momentarily displayed on the LCD unit 12.

Similarly, supposing that the upper 4 bytes D7-D4 of the control word are Japanese selection value and the lower 4 bytes are momentray display → sequence display value, the character information data stored in the second region of the RAM 10 is processed in accordance with the Japanese selection and the LCD controller 11 is controlled according to the momentary display and then the Japanese sentence is momentrarily displayed on the LCD unit 12 according to the character information data and again, the Japanese sentence is displayed in sequence on the LCD unit 12 in the same way as above. Thereafter, when the starting signal indicating the start of the sentence is again detected, the information in line with the character information data is displayed on the LCD unit 12 by repeating the processing procedures in the same way as above.

On the other hand, when the control word signal is constituted by two bytes as above description, and thereby from zero bit to sixth bit D0-D6 of the first byte of said control word are English selection value, and from first bit to fourth bit D1-D4 of the second byte are momentary display selection value then character information data stored to second region of RAM are processed according to its English selection as above description and thereafter the LCD controller 11 is controlled in response to said momentary display, and English sentence according to said character information is displayed momentarily at the LCD unit 12. However, at this moment, when zero bit D0 of the second byte is a flashing selection value, said displayed English sentence is flashed, and when fifth bit D5 of the second byte is a display connecting value, the sentence is displayed on two liquid crystal devices of said LCD unit 12 for twenty-character indication, and when the sixth and seventh bits D6 and D7 of said second byte is low speed display speed value, said English sentence is controlled so as to be displayed in low speed.

And thereafter, when the starting signal for indicating the start of sentence is detected again, processes as above description are repeatedly executed whereby informations in response to said character information data are displayed on the LCD unit 12.

And, when the interrupt switch S3 is pressed in a state that a sentence is displayed on the LCD unit 12 as above, low potential signals are applied through the input/output section 7 to the CPU 8 as interrupt signals, thereby the CPU 8 reads the information stored in the second region of the RAM 10 and displays it on the LCD unit 12 repeatedly and then finishes the interrupt operation.

On the other hand, in the circuit of Fig. 2, in a state that the switches S1 and S2 are short-circuited to other side fixed terminals b1 and b2, they operate as audio exclusive function as same as aforementioned Fig. 1, and when cassette tape T recorded as shown in Fig. 8A is played back in a state that the switches S1 and S2 are short-circuited to one side fixed terminals a1 and a2, then the character information display function is executed as similar as aforementioned Fig. 1.

However, at this moment, since weak signal played back from the left head LH is amplified at the pre-amplifier 1 and thereafter being applied through the switch S1 to the pre-amplifier 5, the character information display function is more stably executed.

And, in the circuit of Fig. 3, in case when the cassette tape T recorded as in Fig. 8B is played back, stereophonic sound signal recorded at right track RT of said cassette tape T is played back at the right head RH and thereafter being amplified at the amplifier 2 and the power amplifier 4 to thereby be output to the right speaker RS. And the stereophonic sound signal and character information signal and the like recorded at the right track LT of said cassette tape T are played back at the left head LH and then being amplified at the pre-amplifier 1, and the sterophonic sound signal which is low frequency signals among the output signals of said pre-amplifier 1 masses through the low pass filter 13 and thereafter being amplified at the power amplifier 3 whereby being output to the left speaker LS, and the character information signal and the like which are high frequency signal among the output signals of said pre-amplifier 1, that is, the starting signal for indicating the start of sentence, the control word signal for indicating language selecting function and display selecting function, and the ending signal for indicating the character information signal and the end of sentence are passed through the high pass filter 14 whereby being applied to the pre-amplifier 5, and according to this, said character information signal is processed in a manner as same as the description of aforementioned Fig. 1 to thereby be displayed on the LCD unit 12.

On the other hand, in the circuit of Fig. 4, in case when the cassette tape T recorded as in Fig. 8B is played back, stereophonic sound signals recorded at left and right tracks LT and RT of said cassette tape T are respectively played back at left and right heads LH and RH and thereafter being amplified at the pre-amplifiers 1 and 2 and the power amplifiers 3 and 4 to thereby be output to the left and right speakers LS and RS, respectively. And, at this moment, the starting signal for indicating the start of sentence recorded to another left track LT', the control word signal for indicating language selecting function and display selecting function, and the ending signal for indicating the character information signal and the end of sentence are played back at another left head LH' whereby being applied to the pre-amplifier 5, and according to this, the signal played back at another left head LH' is processed in same manner as the description of aforementioned Fig. 1.

On the other hand, in the circuit of Fig. 5, in case when the cassette tape T recorded am in Fig. 8E is played back, the signal played back at the play back head is amplified at the playback amplifier 21 and thereafter being decoded into the signal of original arranging state at the Reed-Solomon decoder 22, and said decoded signal is modulated into 8 bits signal at the 10/8 bit modulator 23, and the stereophonic sound digital signal among said modulated signals is converted to analog signal at the digital/analog converter 24 and thereafter being output through the audio filters 25 and 26 respectively to the left and right speakers LS and RS. And, the starting signal among said modulated signals, the control word signal, the character information signal and the ending signal are received at the microcomputer 27 whereby applying to the input/output section 7, so that the character information displaying function can be executed in same manner as the description of aforementioned Fig. 1.

On the other hand, a technical constituting gist of the present invention as in the above description can be applied to compact disc player. That is, in case when the sound signal is recorded on the compact disc, above-described starting signal, control word signal, and character information signal and ending signal are recorded to subcode so as to be able to discriminate as code, and in case of playing back of said compact disc, said starting signal, control word signal, and character information signal and ending signal are separated out from said playback signal and thereafter being filtered in digital whereby being applied to the input/output section 7 as described above, so that the character information display function can be executed.

And, as above description, the starting signal, control word signal, and character information signal and endng signal are recorded to the tape and thereafter recopy preventing signal of predetermined period is recorded, so that the recopy of the tape can be detected by the detection of said recopy preventing signal. As described above in detail, according to the present invention, since the sound signal is played back at the right head whereby outputing to the left and right speakers, and the character information signal corresponding to said sound signal is played back at the left head whereby being displayed on the liquid crystal display unit mounted to the cassette tape player, it is possible to use as a learning aid without receiving obstruction for learning place, and since the sentence according to the character information signal can be displayed momentarily or sequentially on the liquid crystal display unit according to the recorded control words, the learning effect can be further improved, and since a portion for processing the played back character information signal can be constituted by a single chip, it is possible to further miniaturize and at the same time to provide in cheaper price, and there is effect that it can be applied also to the digital audio tape recorder as well as the compact disc player without any particular difficulty.

## Claims

1. A character information display system of cassette player comprising :
   left and right heads (LH), (RH) for tracking left and right tracks (LT), (RT) of a tape ;
   first and second switches (S1), (S2) by which the reproduction signal of the left and right heads (LH), (RH) are output optionally,
   first pre-amplifier (2) for amplifying the reproduction signal from said right head (RH) ;
   second pre-amplifier (1) for amplifying the reproduction signal from the first switch (S1) or the second switch (S2) ;
   first and second power amplifiers (3), (4) for amplifying and outputting the output signals from the first and second pre-amplifiers (2), (1) to left and right speakers (LS), (RS) ;
   third pre-amplifier (5) for amplifying the reproduction signal output from the first switch (S1) ;
   analog/digital converter (6) for converting the output signal from the third pre-amplifier (5) into digital signal ; input/output section (7) for outputting by receiving the output signal from the analog/digital converter (6) ;
   central processing unit (8) for processing the output signal from the input/output section (7) in compliance with the contents of the program of ROM (9) and outputting the processed signal into character display signal ;
   RAM (10) for storing temporarily the data processed in the central processing unit (8) ; and
   LCD controller (11) for displaying the character display signal output from the central processing unit (8) on a LCD unit (12).

2. The system as claimed in claim 1, wherein said switches (S1), (S2) are provided at the output stage of said pre-amplifiers (1), (2), and thereby the output signal of said pre-amplifier (1) is selectively applied to the power amplifier (5) and the pre-amplifier (5), and the output signal of the preamplifier (2) is selectively applied to the power amplifier (3).

3. The system as claimed in claim 1 or claim 2 wherein audio signal is recorded in monaural on the right track of tape to be tracked by the right head and on the left track of tape to be tracked by the left head a starting signal indicating the start of a sentence, a control word signal indicating the language selection function and display selection function, and an ending signal indicating the character information signal of a sentence and the end of a sentence are recorded in order.

4. The system as claimed in claim 1, wherein the reproduction signals of said left and right heads (LH), (RH) are respectively applied directly to said pre-amplifiers (1), (2), and low frequency signal among said pre-amplifier 1 is applied through a low band pass filter (13) to said power amplifier (3) and high frequency signal is applied through high pass filter (14) to said pre-amplifier (5).

5. The system as claimed in claim 4, wherein the sound signal is recorded in stereophony to the left and right tracks of tape to be tracked at said left and right heads (LH), (RH) and at the same time, the starting signal for indicating the start of sentence, the control word signal for indicating language selecting function and indication selecting function, and the ending signal for indicating the language selecting fuction of one sentence and the end of one sentence are recorded in sequence so as to be overlapped with said sound signals at every predetermined section of said left track.

6. The system as claimed in claim 1, wherein the reproduction signal of the left and right heads (LH), (RH) are directly applied to the first and second pre-amplifiers (1), (2) and the reproduction signal of the second left head (LH') is applied to the third pre-amplifier (5).

7. The system as claimed in claim 6, wherein sound signal is recorded in sterophonic on the left and right tracks of tape to be tracked by the left and right heads (LH),(RH), and on another left track of tape to be tracked by the second left head (LH') the starting signal indicating the start of sentence, a control word signal indicating the language selection function and display selection function and an ending signal indicating the character information signal of a sentence and the end of a sentence are recorded in order.

8. A method for displaying the character information comprising the following steps of :
   displaying the title on a LCD unit (12) by turning on a LCD controller (11) after initializing the system by a central processing unit (8) ;
   storing the character information data by reading by one byte in the first region of RAM (10) in order until the ending signal indicating the end of sentence is detected when the central processing unit (8) detects the start signal indicating the start of sentence ;
   storing the character information data stored in the first region of the RAM (10) in the second region of the RAM (10) when the ending signal is detected ;
   preforming the language selection function processing and display selection processing by analyzing the control word signal ; and
   displaying the character information data stored in the second region of the RAM (10) on the LCD unit (12) via the LCD controller (11).

9. The method as claimed in claim 8, wherein the control word signal consisting of one byte includes the upper four bytes indicating the language selection value, and the lower four bytes indicating the display selection value.

10. The method as claimed in claim 8, wherein said control word signal consisting of two bytes includes a first byte indicating a language selecting value, and a second byte indicating a display selecting value.

11. The method as claimed in claim 10, wherein zero bit of said second byte indicates a flashing value, from first bit to fourth bit indicate, a display selecting value, fifth bit indicates a display connecting value, and sixth and seventh bits indicate a display speed value.

## FIG.1

# FIG.2

# FIG.3

```
┌──────────────┐
│  LCD UNIT    │──12
└──────────────┘
        ↕
┌──────────────┐
│ LCD CONTROLLER│──11
└──────────────┘
        ↕
         9                    8                      10
┌──────────┐      ┌──────────────┐      ┌──────────┐
│  R O M   │◄────►│   C P U      │◄────►│  R A M   │
└──────────┘      └──────────────┘      └──────────┘
                         ↑
                                    7      S3
                  ┌──────────────┐
                  │ INPUT/OUTPUT │───o  o───┐
                  └──────────────┘          ⏚
                         ↑
                                    6
                  ┌──────────────┐
                  │ A/D CONVERTER│
                  └──────────────┘
                         ↑
                                    5
                  ┌──────────────┐
                  │ PRE-AMPLIFIER│
                  └──────────────┘
                         ↑
                                    14
                  ┌──────────────┐
                  │ HIGH-PASS    │
                  │ FILTER       │
                  └──────────────┘
                         ↑
    1                              13              3
┌────────────┐   ┌──────────┐   ┌──────────┐
│ PRE-       │──►│ LOW-PASS │──►│ POWER    │──►◁ LS
│ AMPLIFIER  │   │ FILTER   │   │ AMPLIFIER│
└────────────┘   └──────────┘   └──────────┘
LH

┌────────────┐                  ┌──────────┐
│ PRE-       │─────────────────►│ POWER    │──►◁ RS
│ AMPLIFIER  │                  │ AMPLIFIER│
└────────────┘                  └──────────┘
RH        2                          4
```

# FIG.4

# FIG.5

# FIG.6

```
        ┌─────────────────┐
        │     System      │
        │ Initialization  │
        └─────────────────┘
                │
                ▼
        ┌─────────────────┐
        │ Starting Signal │
        │   Recording     │
        └─────────────────┘
                │
                ▼
        ┌─────────────────┐
        │  Control  Word  │
        │   Recording     │
        └─────────────────┘
                │
                ▼
        ┌─────────────────┐      ┌─────────────────┐
        │ 1 Byte Recording│      │   Next  Byte    │
        └─────────────────┘      └─────────────────┘
                │                         ▲
                ▼                         │
            ╱───────╲        No           │
           ╱  End of  ╲──────────────────┘
           ╲ Sentence?╱
            ╲───────╱
                │ Yes
        ┌─────────────────┐      ┌─────────────────┐
        │  Next  Sentence │      │ Ending Signal   │
        └─────────────────┘      │   Recording     │
                ▲                └─────────────────┘
                │                         │
                │  Yes    ╱───────╲       ▼
                └────────╱ Another  ╲
                         ╲ Sentence?╱
                          ╲───────╱
                              │ No
                              ▼
                      ┌─────────────┐
                      │    E N D    │
                      └─────────────┘
```

# FIG.7

```
        ╭─────────────────╮
        │     System      │
        │ Initialization  │
        ╰────────┬────────╯
                 ▼
        ┌─────────────────┐
        │  L C D  Unit ON │
        └────────┬────────┘
                 ▼
        ┌─────────────────┐
        │  Title  Display │
        └────────┬────────┘
                 ▼
              ╱────────╲
    No       ╱ Starting ╲
    ◄───────◄            ►
             ╲  Signal? ╱
              ╲────────╱
                 │ Yes
                 ▼
        ┌─────────────────┐
        │ Read 1Byte Signal│
        └────────┬────────┘
                 ▼
        ┌─────────────────┐
        │ Store in 1st region│
        │ of RAM          │
        └────────┬────────┘
                 ▼
              ╱────────╲
    No       ╱  Ending  ╲
    ◄───────◄            ►
             ╲  Signal? ╱
              ╲────────╱
                 │ Yes
                 ▼
        ┌─────────────────────────┐
        │ 1st Region Data of RAM →│
        │ Store in 2nd Region of RAM│
        └────────────┬────────────┘
                     ▼
        ┌─────────────────┐
        │ Control Word    │
        │ Analysis        │
        └────────┬────────┘
                 ▼
        ┌─────────────────┐
        │ Language Selection│
        │ Process         │
        └────────┬────────┘
                 ▼
        ┌─────────────────┐
        │ Display  function│
        │ Selection Process│
        └────────┬────────┘
                 ▼
        ┌─────────────────┐
        │ Display  for each│
        │ function Selection│
        └─────────────────┘
```

## FIG.8A

| RT | – SOUND – | ← T |
| LT | – DATA – | |

## FIG.8B

| RT | – SOUND – | | | ← T |
| LT | – SOUND – | -SOUND+DATA- | – SOUND– | |

## FIG.8C

| RT | – SOUND– | | | ← T |
| LT | – SOUND– | – DATA – | – SOUND– | |

## FIG.8D

| LT | – SOUND – | |
| RT | – SOUND – | |
| | | ← T |
| RT′ | · | |
| LT′ | – DATA– | |

## FIG.8E

| – SOUND– | – DATA – | – SOUND– | ← T |
| (Right) | | (Left) | |

Moving direction of tape

FIG.9A

A    B    C

FIG.9B

Starting    A    B    C
SOUND

European Patent Office

**EUROPEAN SEARCH REPORT**

Application Number

EP 90 42 0505
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-U-8711860 (HAOWEIL AUTOMATION CO.,LTD.) <br> * page 1, line 12 - page 2, line 20 * <br> --- | 1-8 | G11B27/34 <br> G11B5/008 <br> G11B20/00 <br> //G09B5/06 |
| Y | US-A-3913135 (DAMLAMIAN) <br> * the whole document * | 1 | |
| A | * the whole document * <br> --- | 3, 8 | |
| Y | PATENT ABSTRACTS OF JAPAN <br> vol. 9, no. 323 (P-414)(2046) 18 December 1985, <br> & JP-A-60 147968 (TOSHIBA K.K.) 05 August 1985, <br> * the whole document * | 2 | |
| A | <br><br> --- | 1, 3, 5, 8 | |
| Y | PATENT ABSTRACTS OF JAPAN <br> vol.3,no.103 *E-134* page 22E134,31-08-1979, <br> &JP-A54 080721*HITACHI SEISAKUSHO K.K*27-07-1979 <br> * ABSTRACT and Figures of JP-A-54 080721 * | 3, 5 | |
| A | <br> --- | 1, 2, 8 | |
| Y | PATENT ABSTRACTS OF JAPAN <br> vol. 5, no. 118 (P-73)(790) 30 July 1981, <br> & JP-A-56 058109 (MATSUSHITA DENKI SANGYO K.K.) <br> 21 May 1981, <br> * the whole document * | 4 | TECHNICAL FIELDS SEARCHED (Int. Cl.5) <br><br> G11B |
| A | <br> --- | 1 | |
| Y | PATENT ABSTRACTS OF JAPAN <br> vol. 6, no. 30 (P-103)(908) 23 February 1982, <br> & JP-A-56 148753 (MATSUSHITA DENKI SANGYO K.K.) <br> 18 November 1981, <br> * the whole document * | 3, 5 | |
| A | <br> --- | 1, 8 | |
| Y | PATENT ABSTRACTS OF JAPAN <br> vol.9, no.239 *P-391* *1962* SEPT.25,1985, <br> & JP-A 60 091441 *GAKUSHIYUU KENKIYUUSHITA K.K.* <br> 22-05-1985, <br> * Abstract and Figures of JP-A 60 091441 * | 8 | |
| A | | 1, 3 | |

The present search report has been drawn up for all claims

| Place of search | Date of completion of the search | Examiner |
|---|---|---|
| THE HAGUE | 03 APRIL 1991 | DAALMANS F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent
Office

EUROPEAN SEARCH REPORT

Application Number

EP 90 42 0505
Page 2

| DOCUMENTS CONSIDERED TO BE RELEVANT | | | | |
|---|---|---|---|---|
| Category | Citation of document with indication, where appropriate, of relevant passages | | Relevant to claim | CLASSIFICATION OF THE APPLICATION (Int. Cl.5) |
| Y | GB-A-2087631 (SONY CORPORATION)<br>* the whole document * | | 5-7 | |
| A | * the whole document * | | 1, 3, 8 | |
| A | PATENT ABSTRACTS OF JAPAN<br>vol. 12, no. 166 (P-704)(3013) 19 May 1988,<br>& JP-A-62 279585 (ASCII CORP.) 04 December 1987,<br>* the whole document * | | 1, 8 | |
| A | PATENT ABSTRACTS OF JAPAN<br>vol. 12, no. 144 (P-697)(2991) 06 May 1988,<br>& JP-A-62 264401 (NIFCO INC.) 17 November 1987,<br>* the whole document * | | 1, 3, 8 | |
| A | PATENT ABSTRACTS OF JAPAN<br>vol. 10, no. 160 (P-465)(2216) 07 June 1986,<br>& JP-A-61 011984 (NIPPON JIDOSHA BUHIN SOGO KENKYUSHO K.K.) 20 January 1986,<br>* the whole document * | | 1, 3 | |
| A | PATENT ABSTRACTS OF JAPAN<br>vol. 12, no. 303 (P-746)(3150) 18 August 1988,<br>& JP-A-63 074167 (MATSUSHITA ELECTRIC IND. CO.,LTD.) 04 April 1988,<br>* the whole document * | | 1, 8 | TECHNICAL FIELDS SEARCHED (Int. Cl.5) |
| A | PATENT ABSTRACTS OF JAPAN<br>vol. 10, no. 298 (P-505)(2354) 09 October 1986,<br>& JP-A-61 113104 (NIPPON SOKEN INC.) 31 May 1986,<br>* the whole document * | | 1, 3, 8 | |
| A | EP-A-0256835 (TAJIRI KIKAI KOGYO K.K.)<br>* the whole document * | | 1, 8 | |
| A | EP-A-0256834 (TAJIRI KIKAI KOGYO K.K.)<br>* the whole document * | | 1, 8 | |
| | -/-- | | | |

The present search report has been drawn up for all claims

| Place of search | Date of completion of the search | Examiner |
|---|---|---|
| THE HAGUE | 03 APRIL 1991 | DAALMANS F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................
& : member of the same patent family, corresponding document

EPO FORM 1503 03.82 (P0401)

## EUROPEAN SEARCH REPORT

European Patent
Office

Application Number

EP 90 42 0505
Page 3

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | GB-A-2228133 (HYUM MIN KIM)<br>* the whole document * | 1, 3, 6-11 | |
| | | | **TECHNICAL FIELDS SEARCHED (Int. Cl.5 )** |

The present search report has been drawn up for all claims

| Place of search | Date of completion of the search | Examiner |
|---|---|---|
| THE HAGUE | 03 APRIL 1991 | DAALMANS F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)